# EUROPÄISCHE PATENTSCHRIFT

(11) **EP 2 547 222 B1**
(45) Veröffentlichungstag und Bekanntmachung des Hinweises auf die Patenterteilung: **30.04.2014**
(21) Anmeldenummer: 11708797.3
(22) Anmeldetag: 10.03.2011
(51) Int. Cl.: A23L 2/74, C12G 3/08, C12H 1/06

(54) **ANLAGE UND VERFAHREN ZUR FILTRATION VON GETRÄNKEN**
FACILITY AND PROCESS FOR THE FILTRATION OF BEVERAGES
INSTALLATION ET PROCEDE POUR LA FILTRATION DE BOISSONS

(30) Priorität: 18.03.2010 DE 102010011932
(43) Veröffentlichungstag der Anmeldung: 23.01.2013
(73) Patentinhaber: GEA Mechanical Equipment GmbH, 59302 Oelde (DE)
(72) Erfinder: HERBERG, Wolf-Dietrich, 58456 Witten (DE); GUTTE, Reimar, 59302 Oelde (DE)
(74) Vertreter: Specht, Peter
(86) Internationale Anmeldenummer: PCT/EP2011/053591
(87) Internationale Veröffentlichungsnummer: WO 2011/113738

(56) Entgegenhaltungen:
- DE-A1- 10 164 555
- GB-A- 2 341 809
- US-A- 5 256 294
- US-A- 6 017 451
- US-B2- 6 951 614

## Beschreibung

Die Erfindung betrifft eine Anlage und ein Verfahren zur Klärung von Getränken, insbesondere zur Klärung von Wein, durch Filtration nach dem Oberbegriff des Anspruchs 1 und des Anspruchs 11.

Getränke, die aus Obst- oder Getreide gewonnen werden, enthalten in der Regel Trubstoffe, die entweder kolloidal in der Flüssigkeit vorliegen oder die als Geläger in einem Behältnis absetzen.

Bei der Klärung von Wein aus einem Gärtank ist es bekannt, den Wein getrennt vom Trub - dem sogenannten Geläger - im unteren Teil des Gärtanks zu verarbeiten.

Zur Klärung des Weins werden beispielsweise Filtrationsanlagen eingesetzt. Der Trub bzw. das Geläger wird separat verarbeitet oder verworfen, da die gängigen Filtrationsanlagen zwar zur Verarbeitung des Weins geeignet und ausgelegt sind, nicht aber zur Verarbeitung des Trubes bzw. Gelägers mit einem im Vergleich zum Wein sehr viel höheren Anteil an Trubstoffen. Nur in sehr großen Weinerzeugerbetrieben ist es gelegentlich sinnvoll, zur Klärung des Gelägers eine eigene Verarbeitungslinie bereit zu stellen, um aus dem Geläger zumindest noch einen Wein verringerter Qualität zu gewinnen. In kleinen Weinerzeugerbetrieben ist dies aus Kostengründen nicht sinnvoll.

Die Erfindung hat die Aufgabe, dieses Problem zu beheben.

Die Erfindung löst diese durch die Gegenstände der Ansprüche 1 und 11.

Anspruch 1 schafft eine Filtrationsanlage zur Klärung eines trüben Getränks, insbesondere eines trüben Weins, aus wenigstens einem Tank, in welchem sich ein Geläger ausgebildet hat, durch eine Cross-Flow-Filtration, gekennzeichnet durch folgende Merkmale: a) einen ersten Filtrationskreislauf mit wenigstens einem Filtrationsmodul mit wenigstens einem oder mehreren Filtrationselementen mit Kanälen mit einem ersten Durchmesser, und b) einen dazu vorzugsweise parallelen zweiten Filtrationskreislauf mit wenigstens einem Filtrationsmodul mit wenigstens einem oder mehreren Filtrationselementen mit Kanälen mit einem relativ zum ersten Durchmesser größeren zweiten Durchmesser.

Anspruch 11 schafft ein Verfahren zur Filtration eines trüben Getränks, insbesondere eines trüben Weins, aus wenigstens einem Tank, in welchem sich ein Geläger ausgebildet hat, mit einer Anlage nach einem oder mehreren der vorstehenden Ansprüche: a) a1) das trübe Getränk wird entweder im ersten Filtrationskreislauf mit den Filtrationsmodulen mit den Kanälen mit dem kleineren Durchmesser geklärt und abgeleitet oder a2) das trübe Getränk wird in beiden Filtrationskreisläufen mit den Filtrationsmodulen mit den Kanälen mit dem kleineren Durchmesser und den Filtrationsmodulen mit dem größeren Durchmesser parallel geklärt und abgeleitet, und b) das verbleibende Unfiltrat aus Schritt a) und/oder das Geläger des trüben Getränks wird/werden daraufhin im zweiten Filtrationskreislauf mit den Filtrationsmodulen mit den Kanälen mit dem größeren Durchmesser geklärt und abgeleitet.

Da erfindungsgemäß wenigstens ein zweites Filtrationsmodul in die Filtrationsanlage integriert wird, das eine oder mehrere Filtrationselemente aufweist, dessen Durchströmungskanäle einen größeren Durchmesser aufweisen als die Filtrationselemente des ersten Filtrationsmoduls, kann nicht nur der zu verarbeitende Wein in den Filtrationselementen mit den Kanälen kleineren Durchmessers geklärt werden sondern es ist auch möglich, das Unfiltrat und/oder Geläger zu filtrieren, und zwar in dem Filtrationsmodulen mit größeren Kanaldurchmesser. Dies ist vorteilhaft, da das hierbei erhaltene Filtrat so beschaffen ist, dass es in der Regel noch als ein Wein verkauft werden kann.

Durch die Module mit den Kanälen größeren Durchmessers wird es möglich, auch das Geläger zu filtrieren, das eine erheblich größere/höhere Viskosität aufweist als das zu verarbeitende trübe Getränk. Am Ende der Filtration kann diese Viskosität des bei der Filtration des Gelägers verbleibenden "pastösen" Retentats/Unfiltrats mehr als 10mal so groß sein, beispielsweise bis zu 30mal so groß wie die Viskosität des bei der Filtration des Weins verbleibenden Retentats.

Dabei können die beiden Filtrationsmodule gemeinsam die Peripherie nutzen (Pumpen, Steuerungsvorrichtungen usw.), welche an der Filtrationsanlage auch für nur einen einzigen Filtrationskreislauf sowieso vorhanden sein müssen. Gegenüber der Anschaffung einer separaten Anlage zur Verarbeitung von Geläger bietet die Erfindung damit erhebliche wirtschaftliche Vorteile.

Vorteilhaft sind Mittel, vorzugsweise Ventile oder Umschwenkbögen, zum Umschalten zwischen dem ersten und dem zweiten Filtrationskreislauf vorgesehen.

Vorteilhafte Ausgestaltungen sind den Unteransprüchen zu entnehmen.

Der Gegenstand der Erfindung wird nachfolgend anhand eines Ausführungsbeispiels unter Bezug auf die Zeichnung näher beschrieben. Es zeigt:
- Fig. 1:: eine schematische Darstellung einer erfindungsgemäßen Filtrationsanlage zur Klärung von Wein;
- Fig. 2A, 1B: Schnittansichten von zwei verschiedenen Membranfiltermodulen,
- Fig. 3:: einen beispielhaften zeitlichen Verlauf des Filtratflussvolumens und des Transmembrandrucks zum Ende einer Filtration;
- Fig. 4:: einen beispielhaften zeitlichen Verlauf des Filtervolumens, des Filtratflusses und des Transmembrandrucks zum Ende einer Filtration.

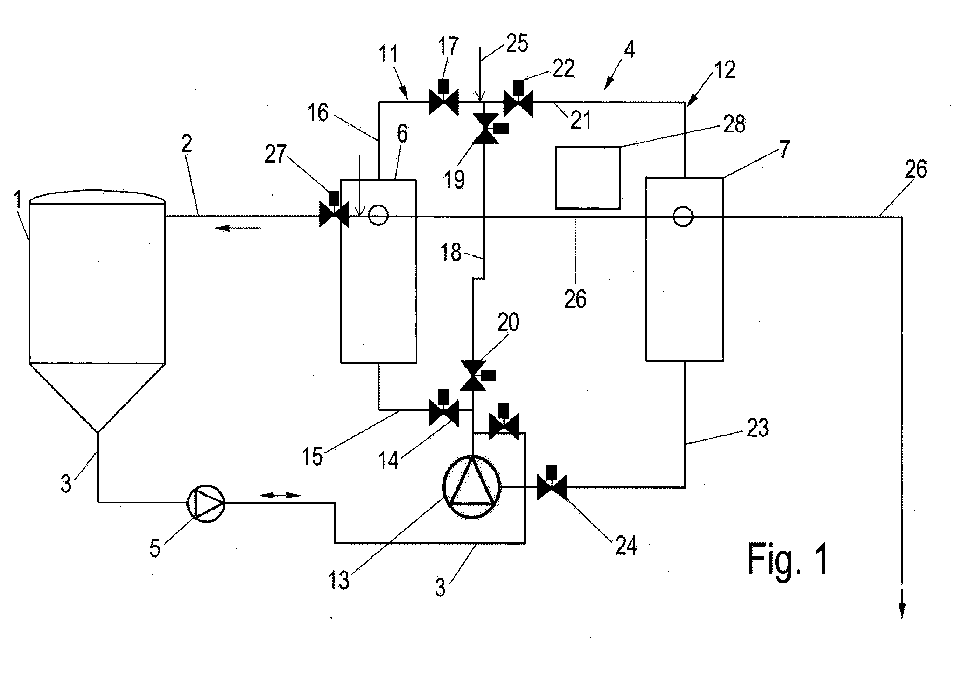

Fig. 1 zeigt eine Filtrationsanlage zur Klärung von Wein durch eine Cross-Flow-Filtration.

Die Filtrationsanalage weist vorzugsweise einen der Anlage vorgeschalteten Speisetank 1 auf, der hier eine bevorzugte im oberen Teil zylindrische und im unteren Teil konische Form aufweist In den Speisetank wird die zu verarbeitende Suspension gefüllt, beispielsweise trüber Wein aus einem Tank oder Geläger aus einem Gärtank (letzterer hier nicht dargestellt).

Der Speisetank 1 ist hier über eine erste - vorzugsweise weiter oben am Speisetank 1 ansetzende - Leitung 2 und eine zweite - weiter unten, vorzugsweise am untersten Punkt des unten konischen Speisetank 1 ansetzende - Leitung 3 mit einer Filtrationsanlage 4 verbunden.

Die Leitung 3 dient als Zuleitung zur Zuleitung des trüben Weins aus dem Speisetank in die Filtrationsanlage 4. Die obere Leitung 2 ist eine Rückleitung zur Rückführung von Filtrat aus der Filtrationsanlage 4 in den Speisetank 1 (bei der Reinigung, siehe unten). In die Leitung 3 ist hier eine Speisepumpe 5 geschaltet, mit welcher die Suspension in die Filtrationsanlage 4 geleitet werden kann.

Die Filtrationsanlage weist eine Mehrzahl von Filtrationsmodulen (vorzugsweise zwei oder mehr Filtrationsmodule) 6, 7 auf. Die Filtrationsmodule 6, 7 weisen vorzugsweise eines oder mehrere Keramikmembran-Filtrationselement(e) auf, welche im Cross-Flow-Verfahren betrieben werden.

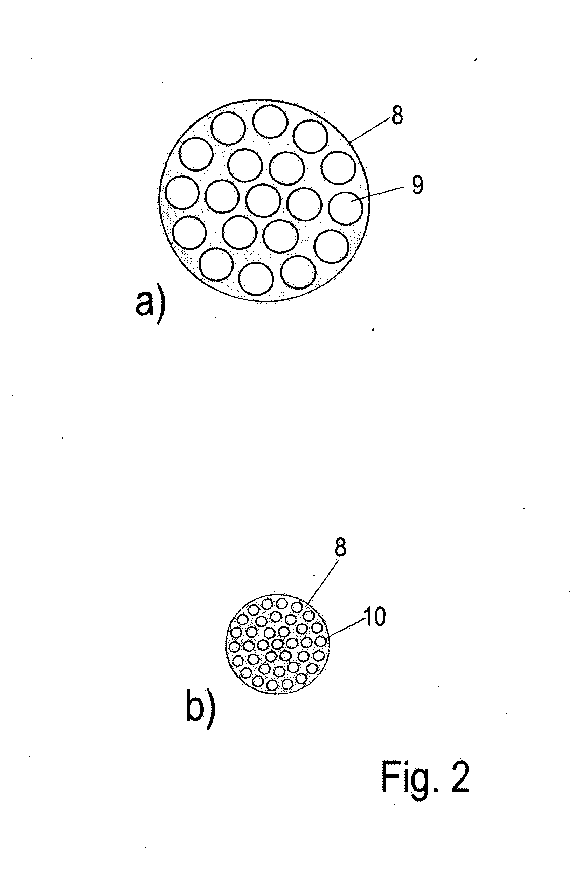

Die Filtrationselemente weisen dazu weisen jeweils einen oder mehrere Keramikkörper 8 auf(siehe Fig. 2). Die Keramikkörper sind vorzugsweise gerade und röhrenartig. Sie sind von Kanälen 9, 10 für die Durchleitung der zu klärenden Suspension durchsetzt.

Die Filtrationsanlage 4, 5 weist wenigstens zwei - hier genau zwei - Filtrationskreisläuse 11, 12 auf. Zur Aufrechterhaltung des Flüssigkeitsstroms 11, 12 in den beiden Filtrationskreisläufen 11, 12 dient eine für beide Filtrationskreisläufe gemeinsam genutzte Pumpe 13.

Aus der Zuleitung 3 zuströmende Suspension gelangt zunächst in die Pumpe 13.

Mit der Pumpe 13 wird die Suspension dann entweder in den ersten Filtrationskreislauf 11 oder in den dazu parallelen zweiten Filtrationskreislauf 12 oder in beide Filtrationskreisläufe 11, 12 parallel geleitet.

Der erste Filtrationskreislauf wird hier durch wenigstens folgende Elemente gebildet:

Eine Leitung 14 mit einem ein Ventil 15, wenigstens ein der Leitung 14 nachgeschaltetes Filtrationsmodule 6, eine Leitung 16 mit einem Ventil 17 und eine Leitung 18 mit Ventilen 19, 20, wobei die Leitung 18 wieder mit der Leitung 13 verbunden ist.

Der zweite Filtrationskreislauf 12 wird hier durch wenigstens folgende Elemente gebildet:

Die Leitung 18 mit den Ventilen 19, 20, eine Leitung 21 mit einem Ventil 22, eines oder vorzugsweise mehrere der Filtrationsmodule 7 und eine Leitung 23 mit einem Ventil 24, wobei die Leitung 23 wieder in die Leitung 18 mündet.

Es ist ferner eine Zuleitung 25 für ein Fluid wie ein Gas vorgesehen, welche hier in die Leitung 18 mündet.

Zudem ist eine Ableitung 26 für das Filtrat aus den Filtrationsmodulen 6, 7 vorgesehen. In die Ableitung 26 ist ein Ventil 27 geschaltet. Wird dieses geöffnet, wird die Leitung 26 mit der "Rück-"Leitung 2 zum Speisetank verbunden, so dass Filtrat in den Speisetank 1 zurückgeleitet werden kann, vorzugsweise bei einer Reinigung.

Eine der Ableitung 26 zugeordnete Reinigungseinrichtung 28 ermöglicht die Reinigung der Filtrationselemente.

Wesentlich ist, dass wenigstens zwei verschiedene Arten von Filtrationselementen, vorzugsweise Keramikelemente, mit Kanälen 9, 10 mit wenigstens zwei verschiedenen Durchmessern in den zwei verschiedenen Filtrationskreisläufen 11, 12 angeordnet sind.

Die zu klärende Suspension strömt in den Kanälen 9, 10 entlang der Membran 8 der Filtrationselemente, wobei ein Teilstrom die Membran 8 als Filtrat passiert und durch das Trägermaterial abgeführt wird (Ableitung 26).

Vorzugsweise weist das Filtrationsmodul 7 eines oder mehrere der Filtrationselemente, insbesondere Keramikelemente, mit einem größeren Kanaldurchmesser auf und das Filtrationsmodul 6 eines oder mehrere der Filtrationselemente, insbesondere Keramikelemente, mit einem kleineren Kanaldurchmesser.

Vorzugsweise ist nur ein Filtrationselement mit den Kanälen 9 größeren Durchmessers im Filtrationsmodul 7 des Kreislaufs 12 vorgesehen, wohingegen der Kreislauf 12 mit mehreren - beispielsweise sechs - Filtrationselementen mit den Kanälen kleineren Durchmessers versehen ist. Analog zur Größe der Filtrationsanlage verändert sich dieses Verhältnis.

Die Kanäle 9 der Filtrationselemente des ersten Filtrationsmoduls 6 können beispielsweise einen Durchmesser von weniger als 23mm, insbesondere 1-2 mm, besonders vorzugsweise 1,3 mm aufweisen, wie in Fig. 2a abgebildet.

Die Kanäle 10 des wenigstens einen Filtrationselements des zweiten ersten Filtrationsmoduls 7 können dagegen einen Durchmesser von mehr als 6 mm, vorzugsweise 8 mm aufweisen, wie in Fig. 2b abgebildet.

Die Funktion dieser Anlage ist wie folgt.

Zu klärender Wein wird aus dem Speisetank 1 durch die Zuleitung 3 und die Pumpe 5 in die Pumpe 13 der Filtrationsanalage 4 geleitet.

Der trübe Wein enthält nur so viele Feststoffe, dass er im Filtrationskreislauf 11 mit den Filtrationsmodulen 6 mit den Filtrationselementen mit den Kanälen 9 mit dem kleineren Durchmesser geklärt werden kann.

Der zu klärende, noch trübe Wein A wird daher mit der Pumpe 13 zunächst in das erste Membranfiltermodul 6 über die Membranoberfläche der Kanäle 10 des ersten Membranfiltermoduls 6 geleitet. Dabei hat der Wein vorzugsweise eine relativ niedrige Überströmgeschwindigkeit von vorzugsweise etwa 1-4m/s, vorzugsweise 2 m/s. Das Filtrat, also hier der geklärte Wein, wird durch die Ableitung 26 abgeleitet.

Zur Verhinderung einer Blockade der Membranporen ist die Reinigungsvorrichtung 26 vorgesehen, die vorzugsweise als Rückspüleinheit ausgebildet ist, welche an der Ableitung 26 angeordnet ist.

Sie bewirkt, dass das Filtrat periodisch zurückgespült werden kann, wodurch die Poren der Membranoberfläche im ersten Membranfiltermodul 6 wieder frei gespült werden.

Je nach Filtrierbarkeit des Weins, kann der Filtrationsprozess über einige Stunden, bis hin zu mehreren Tagen andauern. Im Anschluss an die Filtration wird die Membranoberfläche durch eine Reinigung wieder in den Ausgangszustand zurückversetzt.

Der Filtrationskreislauf 12 mit den Filtrationsmodulen 7 mit Kanälen 10 größeren Durchmessers kann beim Entleeren der Anlage mit Inertgas zur Endfiltration des Inhaltes des erstens Filtrationskreislaufs 11 mit dem Filtrationsmodul 6 mit dem kleineren Kanaldurchmesser verwendet werden., wobei bei geschlossenem Ventil 17 der gesamte Inhalt in das Filtrationsmodul 7 und dort über die Membranen gedrückt wird, wobei eine zusätzliche Menge von beispielsweise 20 bis 30 Litern an geklärtem Wein gewonnen werden kann.

Es ist ferner möglich, vorzugsweise nach dem Klären des trüben Weins, das Geläger aus den Gärtanks zu klären.

Hierzu wird das Geläger in den zweiten Filtrationskreislauf 12 mit den Filtrationsmodulen 7 geleitet. Das Umschalten zwischen erstem und zweitem Filtrationskreislauf erfolgt mittels eines geeigneten Ansteuerns bzw. Umschaltens der Ventile in diesen Kreisläufen.

Das Geläger wird über die Membranoberflächen bzw. durch die Kanäle 10 des Filtrationsmoduls des Filtrationsmoduls 7 mit den Kanälen größeren Durchmessers - also durch den zweiten Filtrationskreislauf geleitet. Der erste Filtrationskreislauf ist dabei geschlossen, damit sich das Filtrationsmodul 6 nicht zusetzt. Das Filtrat, welches bei dieser Filtration entsteht, wird durch die Ableitung 26 abgeleitet. Es ist in der Regel noch so hochwertig, dass es als ein Wein verkauft oder weiterverarbeitet werden kann. Dies ist gerade für kleinere Erzeugerbetriebe ein erheblicher Vorteil.

Bei der Klärung des trüben Weins - nicht des Unfiltrats und/oder des Gelägers - können auch beide Filtrationskreisläufe 11, 12 geöffnet sein, so dass der Wein auch durch das Filtrationsmodul 7 strömt. Hierdurch wird die Funktion der Anlage nicht beeinträchtigt sondern eher optimiert. Bei der Verarbeitung des Unfiltrats, Gelägers oder dgl. wird dagegen der erste Filtrationskreislauf geschlossen.

Zur Reinigung der Filtrationsanlage können die einzelnen Membranfiltermodule nach dem Entleeren bzw. Abfahren der Anlage mit Inertgas entleert werden, wobei die im Filtrationskreislauf verbliebene Flüssigkeit, die normalerweise als Totvolumen anfallen würde, in einem Folgeprozess ebenfalls über das zweite Membranfiltermodul 7 geleitet wird.

Insbesondere die Verwendung von keramischen Membranfilteroberflächen bietet sich für den Filtrationsprozess an, da diese Filtrationsmodule besonders langlebig sind.

Alternativ zur Aufkonzentration on Weingeläger und zur Klärung von Wein können auch Mostgeläger oder andere Getränke mit Feststoffanteilen geklärt werden, bzw. deren Geläger aufkonzentriert werden.

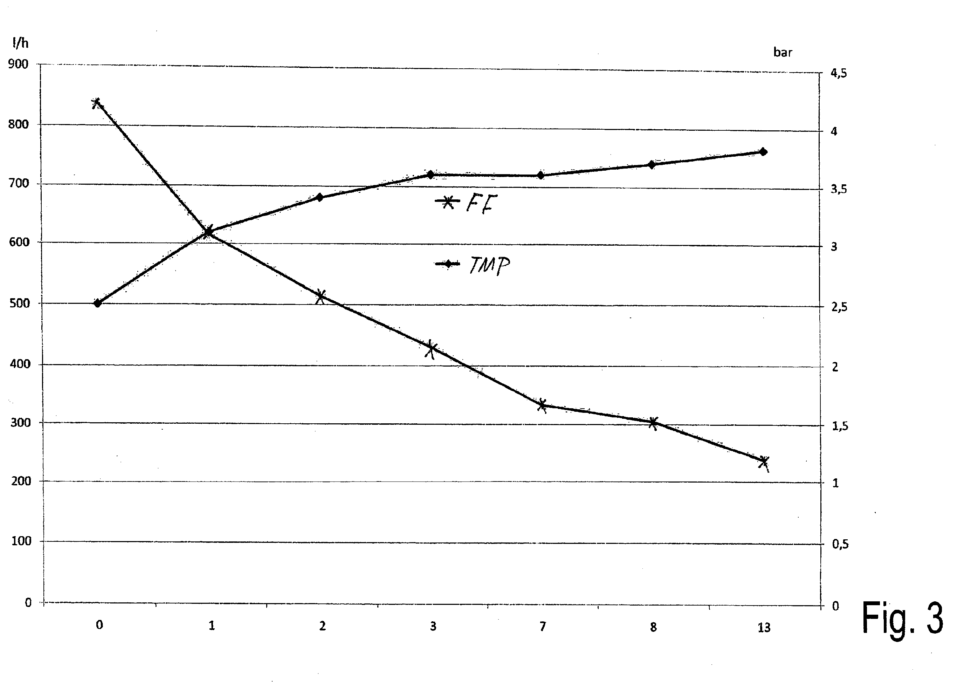

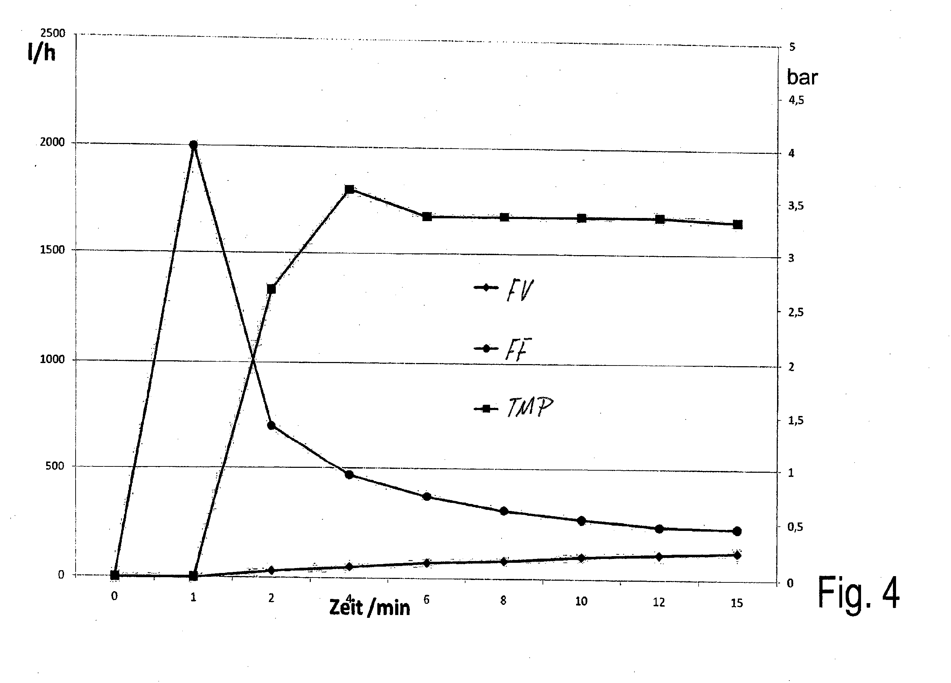

Ein weiterer Vorteil der Filtrationsanlage ergibt sich aus Fig. 3 und 4.

Fig. 3 veranschaulicht das Verhalten bei einem Entleeren der Anlage nach 60 hl Filtration, wobei gilt: FF := Filtratfluss und TMP := Transmembrandruck.

Fig. 4 zeigt ein entsprechendes Entleeren 120 hl Filtration, wobei gilt: FV:= Filtratvolumen, FF := Filtratfluss und TMP := Transmembrandruck.

Die beiden Grafiken der Fig. 3 und 4 illustrieren derart das Leerdrücken der Anlage mit CO₂ zur weiteren Verringerung der Verluste. Nach dem Ende der Filtration ist in der Anlage immer noch ein Restvolumen vorhanden, welches verwertet werden muss. Hierzu wird die Anlage mit Inertgas leergedrückt, durch das Fehlen der Überströmung bricht der Fluss aber relativ schnell zusammen. Die Diagramme illustrieren das Leerdrücken der Anlage nach 4-5 h Filtration und nach 10 h, um eine Erschöpfung des Filters zu simulieren. Die Diagramme belegen, dass ein Leerdrücken mit Gas möglich ist.

### Bezugszeichenliste

- Speisetank: 1
- Leitung: 2
- Leitung: 3
- Filtrationsanlage: 4
- Speisepumpe: 5
- Filtrationsmodule: 6, 7
- Keramikkörper: 8
- Kanäle: 9, 10
- Filtrationskreisläuse: 11, 12
- Pumpe: 13
- Leitung: 14
- Ventil: 15
- Leitung: 16
- Ventil: 17
- Leitung: 18
- Ventile: 19, 20
- Leitung: 21
- Ventil: 22
- Leitung: 23
- Ventil: 24
- Zuleitung: 25
- Ableitung: 26
- Ventil: 27
- Reinigungseinrichtung: 28

## Patentansprüche

1. Filtrationsanlage zur Klärung eines trüben Getränks, insbesondere eines trüben Weins, aus wenigstens einem Tank, in welchem sich ein Geläger ausgebildet hat, durch eine Cross-Flow-Filtration, **gekennzeichnet durch** folgende Merkmale:
a. einen ersten Filtrationskreislauf (11) mit wenigstens einem Filtrationsmodul (6) mit wenigstens einem oder mehreren Filtrationselementen mit Kanälen (10) mit einem ersten Durchmesser, und
b. einen dazu parallelen zweiten Filtrationskreislauf mit wenigstens einem Filtrationsmodul (7) mit wenigstens einem oder mehreren Filtrationselementen mit Kanälen mit einem relativ zum ersten Durchmesser größeren zweiten Durchmesser.

2. Anlage nach Anspruch 1, **gekennzeichnet durch** Mittel, vorzugsweise Ventile, oder Umschwenkbögen zum Umschalten zwischen dem ersten und dem zweiten Filtrationskreislauf.

3. Anlage nach Anspruch 1 oder 2, **dadurch gekennzeichnet, dass** Versorgungsaggregate wie eine Pumpe (13) oder eine Steuereinrichtung (4) der Filtrationsanalage zum Betrieb beider Filtrationskreisläufe vorgesehen sind.

4. Anlage nach Anspruch 1, 2 oder 3, **dadurch gekennzeichnet, dass** die Anlage eine Zuleitung (25) für ein Fluid, vorzugsweise ein Inertgas, aufweist.

5. Anlage nach einem der vorhergehenden Ansprüche, **dadurch gekennzeichnet, dass** das Filtrat des ersten Filtrationsmoduls (6) und das Filtrat des zweiten Filtrationsmoduls (7) durch eine gemeinsame Ableitung (26) aus der Filtrationsanlage abführbar sind.

6. Anlage nach einem der vorhergehenden Ansprüche, **dadurch gekennzeichnet, dass** der Ableitung (26) eine Rückspüleinheit zugeordnet ist.

7. Anlage nach einem der vorhergehenden Ansprüche, **dadurch gekennzeichnet, dass** das erste Filtrationsmodul (6) wenigstens eins oder mehrere Filtrations-elemente mit Kanälen (9) aufweist, die einen Durchmesser von weniger als 2mm aufweisen.

8. Anlage nach einem der vorhergehenden Ansprüche **dadurch gekennzeichnet, dass** das zweite Filtrationsmodul (7) wenigstens eins oder mehrere Filtrationselemente mit Filtrationskanälen aufweist, die einen Durchmesser von mehr als 6mm aufweisen.

9. Anlage nach einem der vorhergehenden Ansprüche **dadurch gekennzeichnet, dass** das erste und das zweite Filtrationsmodul (6, 7) jeweils Filtrationselemente aus Keramik aufweisen.

10. Anlage nach einem der vorhergehenden Ansprüche **dadurch gekennzeichnet, dass** das erste Filtrationsmodul (6) des ersten Filtrationskreislaufs (11) mehr Filtrationselemente als das zweite Modul (7) des zweiten Filtrationskreislaufs (12) aufweist.

11. Verfahren zur Filtration eines trüben Getränks, insbesondere eines trüben Weins, aus wenigstens einem Tank, in welchem sich ein Geläger ausgebildet hat, mit einer Anlage nach einem oder mehreren der vorstehenden Ansprüche:
a. a1) das trübe Getränk wird entweder im ersten Filtrationskreislauf (11) mit den Filtrationsmodulen (6) mit den Kanälen (9) mit dem kleineren Durchmesser geklärt und abgeleitet oder a2) das trübe Getränk wird in beiden Filtrationskreisläufen (11) mit den Filtrationsmodulen (6) mit den Kanälen (9) mit dem kleineren Durchmesser und den Filtrationsmodulen (7) mit dem größeren Durchmesser parallel geklärt und abgeleitet; und
b. das verbleibende Unfiltrat aus Schritt a) und/oder das Geläger des trüben Getränks wird/werden daraufhin im zweiten Filtrationskreislauf (12) mit den Filtrationsmodulen (7) mit den Kanälen (9) mit dem größeren Durchmesser geklärt und abgeleitet.

## Claims

1. A filtration system for clarifying a cloudy beverage, in particular a cloudy wine, from at least one tank, in which dregs have formed, through a cross-flow filtration, **characterized by** the following features:
a. a first filtration circuit (11) having at least one filtration module (6) having at least one or more filtration elements having channels (10) having a first diameter, and
b. a second filtration circuit parallel thereto having at least one filtration module (7) having at least one or more filtration elements having channels having a larger second diameter in relation to the first diameter.

2. The system according to Claim 1, **characterized by** means, preferably valves or side changing curves, for changing over between the first and the second filtration circuit.

3. The system according to Claim 1 or 2, **characterized in that** supply assemblies such as a pump (13) or a control unit (4) of the filtration system are provided for operating both filtration circuits.

4. The system according to Claim 1, 2, or 3, **characterized in that** the system has a supply line (25) for a fluid, preferably an inert gas.

5. The system according to one of the preceding claims, **characterized in that** the filtrate of the first filtration module (6) and the filtrate of the second filtration module (7) can be discharged from the filtration system through a common discharge line (26).

6. The system according to one of the preceding claims, **characterized in that** a back-flushing unit is assigned to the discharge line (26).

7. The system according to one of the preceding claims, **characterized in that** the first filtration module (6) has at least one or more filtration elements having channels (9), which have a diameter of less than 2 mm.

8. The system according to one of the preceding claims, **characterized in that** the second filtration module (7) has at least one or more filtration elements having filtration channels which have a diameter of greater than 6 mm.

9. The system according to one of the preceding claims, **characterized in that** the first and the second filtration modules (6, 7) each have filtration elements made of ceramic.

10. The system according to one of the preceding claims, **characterized in that** the first filtration module (6) of the first filtration circuit (11) has more filtration elements than the second module (7) of the second filtration circuit (12).

11. A method for filtering a cloudy beverage, in particular a cloudy wine, from at least one tank, in which dregs have formed, using a system according to one or more of the preceding claims:
a. (a1) the cloudy beverage is either clarified in the first filtration circuit (11) using the filtration modules (6) having the channels (9) having the smaller diameter and discharged or (a2) the cloudy beverage is clarified in parallel in both filtration circuits (11) using the filtration modules (6) having the channels (9) having the smaller diameter and the filtration modules (7) having the larger diameter and discharged; and
b. the remaining unfiltered material from step (a) and/or the dregs of the cloudy beverage is/are then clarified in the second filtration circuit (12) using the filtration modules (7) having the channels (9) having the larger diameter and discharged.

## Revendications

1. Installation de filtration servant à la clarification d'une boisson trouble, en particulier d'un vin trouble, en provenance d'au moins un réservoir, dans lequel s'est formé un dépôt, grâce à une filtration tangentielle (ou filtration cross-flow), **caractérisée par** les caractéristiques qui suivent :
a. un premier circuit de filtration (11) pourvu d'au moins un module de filtration (6) équipé d'au moins un ou de plusieurs éléments de filtration dotés de canaux (10) présentant un premier diamètre, et
b. un deuxième circuit de filtration parallèle à ce dernier pourvu d'au moins un module de filtration (7) équipé d'un ou de plusieurs éléments de filtration doté de canaux présentant un deuxième diamètre de plus grande taille comparé au premier diamètre.

2. Installation selon la revendication 1, **caractérisé par** des moyens, de préférence des soupapes ou des arcs de passage servant à passer d'un circuit de filtration à l'autre.

3. Installation selon la revendication 1 ou 2, **caractérisée en ce que** des groupes d'alimentation tels qu'une pompe (13) ou un système de commande (4) de l'installation de filtration sont prévus pour faire fonctionner les deux circuits de filtration.

4. Installation selon la revendication 1, 2 ou 3, **caractérisée en ce que** l'installation présente une conduite d'amenée (25) pour un fluide, de préférence pour un gaz inerte.

5. Installation selon l'une quelconque des revendications précédentes, **caractérisée en ce que** le produit filtré issu du premier module de filtration (6) et le produit filtré issu du deuxième module de filtration (7) peuvent être évacués hors de l'installation de filtration par une conduite d'évacuation (26) commune.

6. Installation selon l'une quelconque des revendications précédentes, **caractérisée en ce qu'**une unité de rétrolavage est associée à la conduite d'évacuation (26).

7. Installation selon l'une quelconque des revendications précédentes, **caractérisée en ce que** le premier module de filtration (6) présente au moins un élément de filtration ou plusieurs éléments de filtration dotés de canaux (9), qui présentent un diamètre inférieur à 2 mm.

8. Installation selon l'une quelconque des revendications précédentes, **caractérisée en ce que** le deuxième module de filtration (7) présente au moins un élément de filtration ou plusieurs éléments de filtration dotés de canaux de filtration, lesquels présentent un diamètre supérieur à 6 mm.

9. Installation selon l'une quelconque des revendications précédentes, **caractérisée en ce que** le premier et le deuxième modules de filtration (6, 7) présentent respectivement des éléments de filtration en céramique.

10. Installation selon l'une quelconque des revendications précédentes, **caractérisée en ce que** le premier module de filtration (6) du premier circuit de filtration (11) présente un plus grand nombre d'éléments de filtration que le deuxième module (7) du deuxième circuit de filtration (12).

11. Procédé pour la filtration d'une boisson trouble, en particulier d'un vin trouble, en provenance d'au moins un réservoir, dans lequel s'est formé un dépôt, à l'aide d'une installation selon l'une quelconque ou plusieurs des revendications précédentes, comprenant les étapes suivantes :
a. a1) la boisson trouble est clarifiée soit dans le premier circuit de filtration (11) pourvu des modules de filtration (6) dotés des canaux (9) présentant le diamètre de plus petite taille et est évacuée ou a2) la boisson trouble est clarifiée en parallèle dans les deux circuits de filtration (11) pourvus des modules de filtration (6) dotés des canaux (9) présentant le diamètre de plus petite taille et pourvus des modules de filtration (7) présentant le diamètre de plus grande taille et est évacuée ; et
b. le produit à filtrer restant issu de l'étape a) et/ou le dépôt de la boisson trouble est/sont clarifiés immédiatement après dans le deuxième circuit de filtration (12) pourvu des modules de filtration (7) dotés des canaux (9) présentant le diamètre de plus grande taille et est/sont évacué(s).
